# EUROPÄISCHE PATENTSCHRIFT

(11) **EP 0 846 050 B1**
(45) Veröffentlichungstag und Bekanntmachung des Hinweises auf die Patenterteilung: **12.05.1999**
(21) Anmeldenummer: 96926312.8
(22) Anmeldetag: 22.08.1996
(51) Int. Cl.: B29C 45/54, B29C 45/58

(54) **SPRITZGIESSMASCHINE MIT INTEGRIERTEM HEISSKANALSYSTEM**
INJECTION MOULDING MACHINE WITH INTEGRATED HOT CHANNEL SYSTEM
PRESSE DE MOULAGE PAR INJECTION AVEC SYSTEME A CANAL CHAUFFANT INTEGRE

(30) Priorität: 23.08.1995 CH 2405/95
(43) Veröffentlichungstag der Anmeldung: 10.06.1998
(73) Patentinhaber: Ettlinger Kunststoffmaschinen GmbH, 86343 Königsbrunn (DE)
(72) Erfinder: GANZ, Martin, CH-8050 Zürich (CH); SILLMANN, Paul, CH-4563 Gerlafingen (CH)
(74) Vertreter: Ritscher, Thomas, Dr.
(86) Internationale Anmeldenummer: CH9600290
(87) Internationale Veröffentlichungsnummer: WO9707960

(56) Entgegenhaltungen:
- DE-A- 1 579 101
- DE-A- 2 027 514
- FR-A- 1 339 308
- FR-A- 2 549 770
- GB-A- 1 107 939
- US-A- 3 723 037
- PLASTIQUES MODERNES ET ELASTOMERES, Bd. 35, Nr. 1, Januar 1983 - Februar 1983, PARIS FR, Seite 41 XP002018543 "Moules à injection directe"
- PATENT ABSTRACTS OF JAPAN vol. 9, no. 98 (M-375) [1821] , 27.April 1985 & JP,A,59 222323 (MATSUSHITA DENKI SANGYO KK), 14.Dezember 1984,

## Beschreibung

Die vorliegende Erfindung betrifft eine Spritzgiessmaschine zum Spritzgiessen von Kunststoff-Kleinteilen gemäss Oberbegriff des Anspruchs 1.

Solche Spritzgiessmaschinen sind allgemein bekannt und umfassen grundsätzlich ein Spritzaggregat und eine Schliesseinheit für die Formwerkzeuge, wobei das Spritzaggregat einen Extruder zur Plastifizierung des Kunststoffs und einen Sammelraum für die plastifizierte Masse aufweist, die entweder durch eine axiale Bewegung der Extruderschnecke oder einen separaten Spritzkolben aus der Spritzdüse des Extruders ausgestossen wird. Die Formwerkzeuge mit ihren Kavitäten sind zwischen zwei Aufspannplatten der Schliesseinheit aufgespannt, wobei die Spritzdüse des Extruders beim Ausstossen der plastifizierten Masse an der Werkzeugaufspannplatte des Spritzgiesswerkzeugs kraftschlüssig anliegt.
Bei diesen Maschinen wird das aufgeschmolzene Material vom Sammelraum des Extruders über die in einem Heisskanalverteiler angeordneten Angussdüsen in die Kavitäten gepresst und liegt im Förderweg zwischen Sammelraum und Kavität in der Regel geschmolzenes Material für mehrere Injektionszyklen. Dieses Material wird über längere Zeit wiederholten kurzfristigen Kompressionen und damit verbundenen Temperaturschwankungen ausgesetzt, und weist beim Füllen in die Kavitäten bereits Qualitätsminderungen oder sogar Anteile an Zersetzungsprodukten auf. Es versteht sich, dass deshalb bei den einen oder anderen gefertigten Teilen, Fehlstellen oder vorzeitige Ermüdungserscheinungen auftreten können. Ein weiteres bisher ungelöstes Problem bei der Herstellung von Kleinteilen ist in der anfallenden Menge von Angussstücken zu sehen. So weisen herkömmlich gefertigte Kleinteile immer ein in einem separaten Arbeitsgang abzutrennendes Angussstück auf, dessen Gewicht um ein Vielfaches grösser sein kann, als dasjenige des gefertigten Teils selber. Dabei können bei der nadelverschlusslosen Fertigung bspw. ca. 95% des gespritzten Materials als Abfallmaterial an, während aus nur 5% des gespritzten Materials brauchbare Fertigteile entstehen. Auch wenn dieses Abfallmaterial dem Plastifizierungsprozess wieder zugeführt wird, so leiden damit die charakteristischen Eigenschaften des jeweiligen Kunststoffs und erfüllen die mit diesem Material gefertigten Kleinteile die an sie gestellten Anforderungen nicht mehr vollumfänglich.

Um die mit den Heisskanalverteilern verbundenen Probleme vermindern zu können, wurde mit der DE-A-42'39'776 auch schon vorgeschlagen, eine Spritzgiessmaschine für die gleichzeitige Fertigung zweier Kunststoffkleinteile Zu schaffen, bei welcher die Spritzeinrichtung zwei Spritzaggregate aufweist. Bei dieser Vorrichtung werden die Plastifizierung, der Einspritzvorgang und die Nachdruckregelung individuell für jedes herzustellende Kleinteil ausgeführt, um die für diese Kleinteile erforderliche Qualität ohne Produktionseinbusse erzielen zu können. Bei der Fertigung hochwertiger Kleinteile erweist es sich als besondere Schwierigkeit, mehrere Formen gleichzeitig und in den erforderlichen engen Fertigungstoleranzen, d.h. ohne intrinsische Spannungen oder Fehlstellen und mit präzisem Füllgewicht zu fertigen.

Eine in der Druckschrift "Plastiques Modernes et Elastomères", Bd. 35, Nr. 1, Januar/Februar 1983, Paris, France, Seite 41 beschriebene Vorrichtung weist einen Verteilerblock auf, der - im Unterschied zu konventionellen Spritzgiessmaschinen - mit dem Maschinenteil fest verbunden ist. Dieser Verteilerblock trägt an seiner Frontseite, d.h. zu den Formplatten der Spritzgiessform hin, eine Vielzahl von fest montierten Spritzdüsen, welche in die erste Formplatte der Spritzgiessform hinein ragen. Beim Füllen der Formkavitäten werden die mit dem heissen Verteilerblock fest verbundenen und heissen Düsen über eine Vielzahl von Zufuhrkanälen mit der geschlossenen und kalten Spritzgiessform in Verbindung gebracht. Nach erfolgter Füllung der Formkavitäten wird die kalte Form vom heissen Verteilerblock und dessen Düsen getrennt. Dadurch können die einzelnen Düsen wieder auf die erforderliche hohe Temperatur gebracht werden, während die Spritzgussteile noch in der geschlossenen Form verweilen können, um dort weiter abzukühlen, bevor die Form zur Entnahme der Spritzgussteile geöffnet wird. Der in dieser Vorrichtung vorgesehene Sammelraum befindet sich im Maschinenteil, was sich wegen der Länge der Einspritzkanäle für die Herstellung von Kleinstteilen als unvorteilhaft erweist. Es sei hier noch einmal darauf hingewiesen, dass bei der Herstellung von Kleinstteilen eine lange Verweilzeit des aufgeschmolzenen Kunststoffs in den heissen Zufuhrkanälen zu Materialzersetzungen führt.

Es ist deshalb die Aufgabe der vorliegenden Erfindung, eine Spritzgiessmaschine zu schaffen mit welcher qualitativ einwandfreie, verschleissfeste und langlebige Kleinteile aus technischen Kunststoffen und ohne wesentlichen Ausschuss gefertigt werden können.

Kleinteile, wie sie mit der erfindungsgemässen Spritzgiessmaschine gefertigt werden können, weisen in der Regel ein Gewicht von 0.001 g bis 5 g auf. Es versteht sich jedoch, dass mit der erfindungsgemässen Spritzgiessmaschine auch Teile bis zu 50 g oder mehr gefertigt werden können. Unter technischen Kunststoffen sind PET, ABS, PIC oder ähnliche Materialien zu verstehen.

Diese Aufgabe wird erfindungsgemäss durch eine Spritzgiessmaschine mit den Merkmalen des Anspruchs 1 gelöst. Vorteilhafte Weiterbildungen der Erfindung sind in den abhängigen Ansprüchen beschrieben. Durch diese Maschine wird die Verweilzeit des plastifizierten und unter Druck stehenden heissen Kunststoffmaterials im Sammelraum (andernorts auch Kolben- oder Schneckenvorraum genannt) durch eine Reduktion des Einspritzwegs der Kunststoffschmelze gesenkt. Diese Einspritzwegreduktion wird insbesondere dadurch erreicht, dass der Sammelraum unmittelbar hinter den Auslassöffnungen der Düsenspitze angeordnet ist.

In einer ersten Ausführungsform wird die in einem Plastifizierzylinder erzeugte Kunststoffschmelze über einen Heisskanaladapter in einen Düsenkörper gefördert und in einem Sammelraum innerhalb des Düsenkörpers gesammelt. Die in diesem Sammelraum bereitgestellte Kunststoffschmelze wird mit Hilfe eines Kolbens ausgestossen und über Einspritzkanäle in die Kavitäten gepresst. Bei dieser Ausführungsform weist der Auspresskolben in seinem vorderen Teil eine axiale Bohrung (kolbeninterner Förderkanal) mit einer seitlichen Zuführöffnung auf, durch welche die Kunststoffschmelze in den Sammelraum gefördert wird, sowie an dessen Spitze ein Kugelventil, welches den Sammelraum beim Auspressen abschliesst. Die Austrittsöffnungen der Einspritzkanäle werden mit einer Nadelverschlussvorrichtung verschlossen resp. freigegeben.

In einer anderen Ausführungsform wird die Kunststoffschmelze direkt hinter dem als Hohlzylinder ausgebildeten Auspresskolben erzeugt und axial durch diesen Hohlkolben in den Sammelraum (Kolbenvorraum) gefördert. Wiederum kann mit einem Kugelventil der im Düsenkörper liegende Sammelraum gegen den Zufuhr- resp. Förderkanal des Hohlkolbens verschlossen werden, und können die Auslassöffnungen der Düsenspitze mit einer Nadelverschlussvorrichtung abgeschlossen werden.

In einer weiteren Ausführungsform wird die Kunststoffschmelze nicht durch den Kolben selbst geführt, sondern direkt in den Sammelraum gefördert. Eine mit der Nadelverschlussvorrichtung gekoppelte Schiebervorrichtung erlaubt es, den Sammelraum gegen den Förderkanal zwangsgesteuert abzuschliessen.

Die Vorteile der erfindungsgemässen Spritzgiessmaschine sind für den Fachmann unmittelbar ersichtlich. So erlaubt die Verkürzung des Einspritzwegs auch einen genauer zu regelnden Druckaufbau in der Kavität und ermöglicht eine genau dosierte Füllung derselben mit heissem Kunststoff, was zu Spritzgussteilen mit geringer Fertigungstoleranz führt. Natürlich lassen sich die Kavitäten mit einer solchen Spritzgiessmaschine auch rasch füllen und ist dazu maschinenseitig ein geringerer Fülldruck aufzubringen. Energieersparnis und ein geringerer Maschinenverschleiss sind weitere vorteilhafte Folgen dieser Einspritzwegverkürzung.

Im folgenden soll die Erfindung anhand eines Ausführungsbeispiels und mit Hilfe einer Figur näher erläutert werden. Es zeigen:
- Figur 1:: eine schematische Darstellung einer ersten Ausführungsform einer erfindungsgemässen Spritzgiessmaschine im Querschnitt;
- Figur 2:: eine schematische Darstellung der dazugehörigen Heisskanaldüse im Querschnitt;
- Figur 3:: eine schematische Darstellung einer Konstruktionsvariante dieser Spritzgiessmaschine im Querschnitt;
- Figur 4:: eine schematische Darstellung einer weiteren Ausführungsform der erfindungsgemässen Spritzgiessmaschine im Querschnitt;
- Figur 5:: eine detaillierte Darstellung dieser weiteren Ausführungsform der erfindungsgemässen Spritzgiessmaschine im Querschnitt;
- Figur 6:: eine detaillierte Darstellung der Heisskanaldüse der Ausführungsform gemäss Figuren 4 und 5 im gefüllten Zustand; und
- Figur 7:: eine detaillierte Darstellung der Heisskanaldüse der Ausführungsform gemäss Figuren 4 und 5 im entleerten Zustand.

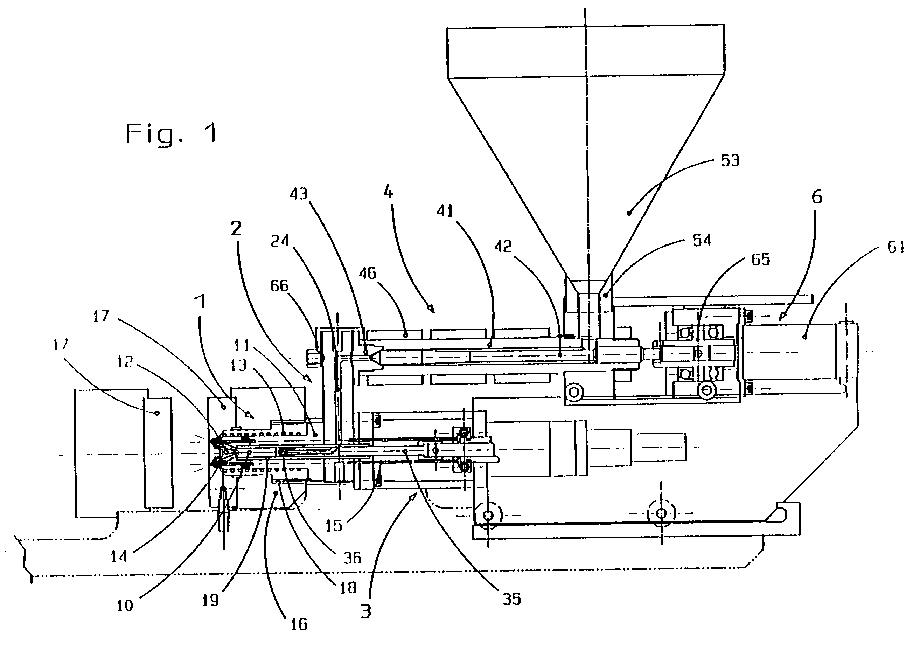

Die in Figur 1 dargestellte Spritzgiessmaschine umfasst eine Antriebseinheit 6, eine Plastifiziervorrichtung 4, insbesondere einen Plastifizierzylinder, einen Heisskanaladapter 2, einen Kolben- und Nadelverschlussantrieb 3, sowie eine erfindungsgemässe Heisskanaldüse 1 als grundlegende Baugruppen. Im Betrieb wird das zu verarbeitende Kunststoffgranulat aus dem Granulatbehälter 53 durch den Granulatzufuhrkanal 54 in das Zylinderrohr 41 gebracht. Die im Innern des Zylinderrohrs 41 liegende Plastifizierschnecke 42 wird über eine Schneckenkupplung 65 von einem Antriebsmotor 61 angetrieben. Das Zylinderrohr 41 ist in bekannter Weise mit Ringheizungselementen 46 beheizt und ist mündungsseitig auf einen Adapter 43 aufgesetzt. Dieser Adapter 43 in Verbindung mit Klemmbügel 66 gewährleistet eine druckfeste Verbindung zum Heisskanaladapter 2, durch welche das plastifizierte Material bis in einen Sammelraum 10 geführt wird. Dieser Sammelraum 10 liegt erfindungsgemäss in der Heisskanaldüse 1. Das sich im Sammelraum 10 angesammelte Material kann mit einem Spritzkolben 35 durch die Düsenspitze 12 der Heisskanaldüse 1 direkt in die Kavitäten des Formwerkzeugs gepresst werden. Der Spritzkolben 35 ist in einem Führungs- und Verschleisseinsatz 19 gelagert und weist in der dargestellten Ausführungsform eine zentrale Bohrung auf, deren antriebsseitiges Ende mit einer Einlassöffnung versehen ist und deren werkzeugseitige Austrittsöffnung mit einem Rückschlagventil, beispielsweise mit einem Kugelventil, ausgerüstet ist. Erfindungsgemäss ragt der Spritzkolben 35 in den Düsenkörper 11 der Heisskanaldüse 1, der mit Hilfe von Düsenheizelementen 13 beheizt ist und eine Düsenspitze 12 trägt. Diese Düsenspitze 12 weist einen oder mehrere Einspritzkanäle mit Auslassöffnungen auf, die zu den Angussöffnungen der einzelnen Kavitäten führen. In der dargestellten bevorzugten Ausführungsform sind diese Auslassöffnungen zum Spritzkolben 35 axial versetzt, um zu ermöglichen, dass die Verschlussnadeln 15 ausserhalb des Führungseinsatzes 19 des Spritzkolbens 35 geführt werden können.

In einer ersten Betriebsphase wird das plastifizierte Material, insbesondere technische Kunststoffe wie PET, ABS, PIC oder ähnliche, durch den Materialzufuhrkanal 24 des Heisskanaladapters 2 in die Einlassöffnung der Spritzkolbenbohrung und weiter durch das geöffnete Rückschlagventil 36 in den Sammelraum 10 und die Einspritzkanäle gefördert, deren Einspritzöffnungen mit den Verschlussnadeln 15 geschlossen sind. Dabei wird soviel Material bereitgestellt, wie für die Füllung der jeweiligen Kavitäten erforderlich ist.

In einer zweiten Phase werden die Verschlussnadeln 15 zurückgezogen, um die Einspritzöffnungen freizugeben; dann wird mit dem Spritzkolben 35 der nötige Druck aufgebaut, um das im Sammelraum 10 enthaltene Material in die Kavitäten der Formplatten 17 zu pressen. Erfindungsgemäss wird damit der für die uniforme Materialverteilung und das genaue Abfüllen erforderliche Druck direkt in den Kavitäten aufgebaut. Durch die Vorwärtsbewegung des Spritzkolbens 35 wird das Rückschlagventil geschlossen und die vorgesehene Materialmenge in die Kavitäten gepresst. Nach erfolgter Füllung werden die Einspritzöffnungen mit Hilfe der Verschlussnadeln 15 verschlossen. Dadurch wird bei der Rückzugsbewegung des Spritzkolbens 35 das Rückschlagventil automatisch wieder entlastet und kann durch den Förderdruck der frisch plastifizierten Masse wieder geöffnet werden. Die Steuerung der einzelnen Komponenten liegt im Bereich des fachmännischen Könnens und ist nicht Gegenstand der vorliegenden Erfindung.

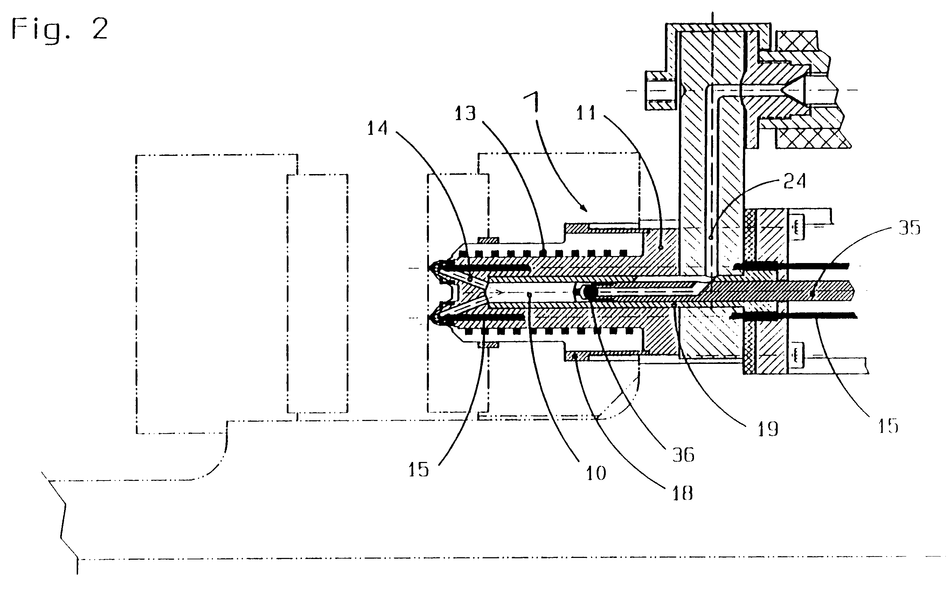

In Figur 2 ist die erfindungsgemässe Heisskanaldüse 1 im Detail dargestellt. Diese weist einen Düsenkörper 11 mit einem darin angeordneten Sammelraum 10 auf. Mit Heizelementen 13 kann dieser Düsenkörper 11 auf die für die Verarbeitung erforderliche Temperatur gebracht respektive stabilisiert werden. In der bevorzugten Ausführungsform weist der Düsenkörper 11 eine Länge ca. 120 mm und einen Durchmesser von ca. 35 mm auf. Der Sammelraum 10 weist einen Durchmesser von ca. 10 mm auf. Vorzugsweise ist dieser Düsenkörper 11 einstückig, kann aber eine separate, insbesondere aus einem anderen Material gefertigte Düsenspitze 12 aufweisen. In der vorliegenden Ausführungsform sind vier Einspritzkanäle 14 vorgesehen, die mit Nadeln 15 der Nadelverschlussvorrichtung geschlossen oder geöffnet werden können. Die Düsenspitze der Heisskanaldüse 1 ragt erfindungsgemäss durch die maschinenseitige Formplatte 17' und ist formschlüssig mit der kavitätsbildenden Formplattenfläche verbunden.
Der Auspresskolben 35 ist kavitätsseitig als Hohlkolben ausgebildet und weist maschinenseitig eine seitliche Einlassöffnung auf, über welche die plastifizierte Kunststoffschmelze von der Plastifiziereinheit in den Sammelraum 10 gefördert werden kann. Ein Rückschlagventil 36 verhindert, dass beim Vortreiben des Spritzkolbens 35 Kunststoffschmelze aus dem Sammelraum 10 in die Bohrung 24 des Spritzkolbens 35 zurückfliessen kann. Eine Führungs- und Verschleisshülse 19 unterstützt das leckagefreie Auspressen der Kunststoffmasse aus dem Sammelraum 10. Um während der Auspressphase weiterhin Kunststoffmaterial aufschmelzen und fördern zu können, weist die Führungs- und Verschleisshülse 19 eine freie Nut 18 auf, über welche die maschinenseitige Einlassöffnung der zentralen Bohrung des Hohlkolbens 35 mit dem Materialzufuhrkanal 24 verbunden bleibt.

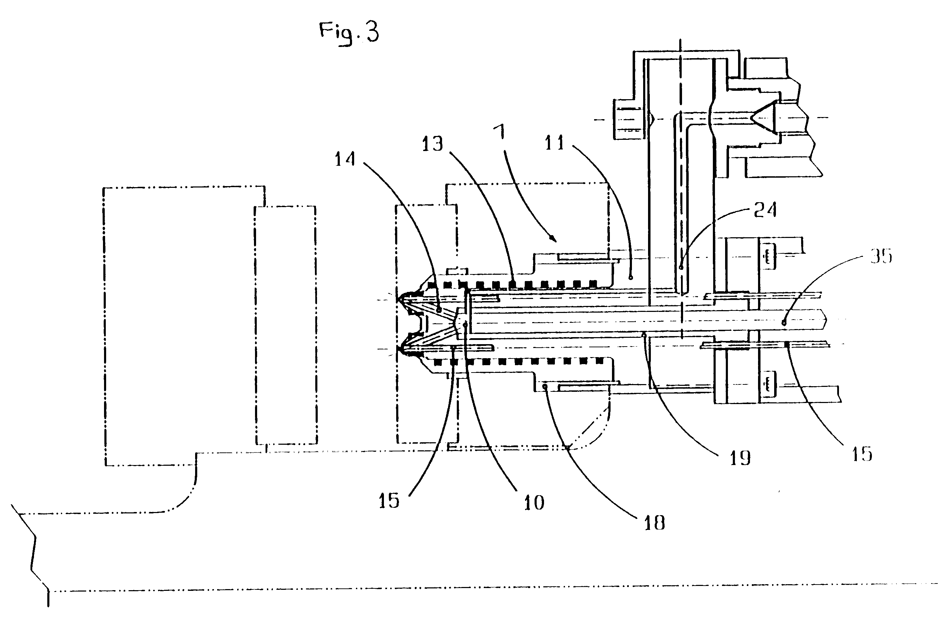

Es versteht sich, dass der Aufbau der erfindungsgemässen Spritzgiessmaschine an bekannte Plastifiziervorrichtungen und druckerzeugende Auspressmittel angepasst werden kann. So ist aus Figur 3 eine weitere Ausführungsform ersichtlich, bei welcher der Materialzufuhrkanal 24 direkt mit dem einspritzkanalseitigen Ende des Sammelraums 10 verbunden ist. Bei dieser Konstruktionsvariante kann auf einen Hohlkolben mit Rückschlagventil verzichtet werden und kann der Sammelraum 10 direkt mit einem an der Nadelverschlussvorrichtung gekoppelten Schieber vom Materialzufuhrkanal 24 abgeschlossen werden. Vorzugsweise werden anstelle der passiven Ventilsysteme aktiv betätigbare d.h. zwangsgesteuerte Verschlüsse eingesetzt, weil damit die Menge der einzuspritzenden Kunststoffmasse noch präziser dosiert werden kann.

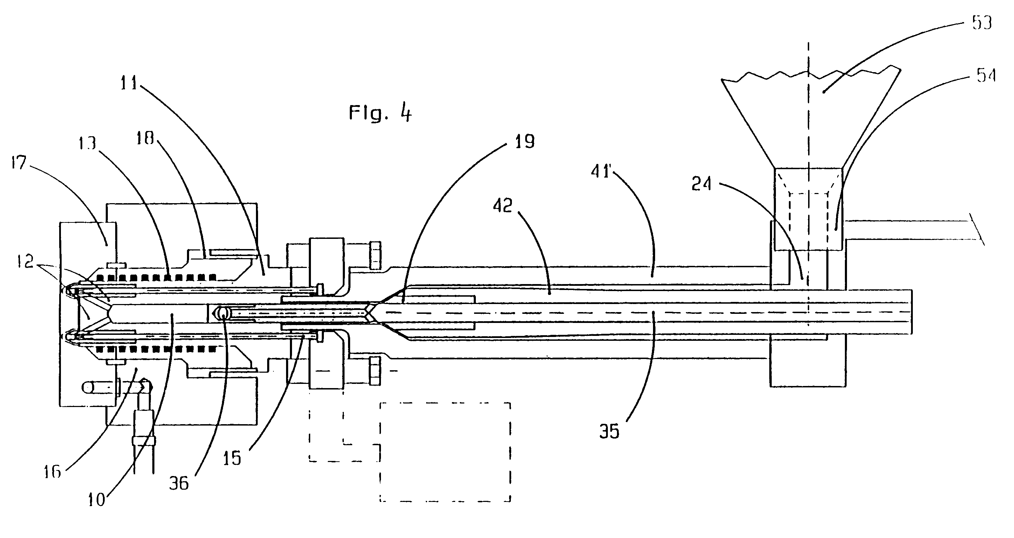

Bei der in Figur 4 dargestellten Ausführungsform liegen die Plastifiziervorrichtung und die druckerzeugenden Mittel zum Ausstossen des im Sammelraum 10 vorhandenen Kunststoffmaterials axial hintereinander. Der Aufbau der erfindungsgemässen Heisskanaldüse 1 entspricht im wesentlichen demjenigen aus Figur 2. Jedoch ist der Kolben 35 bei dieser Ausführungsform axial durch die Plastifizierschnecke 42 geführt.

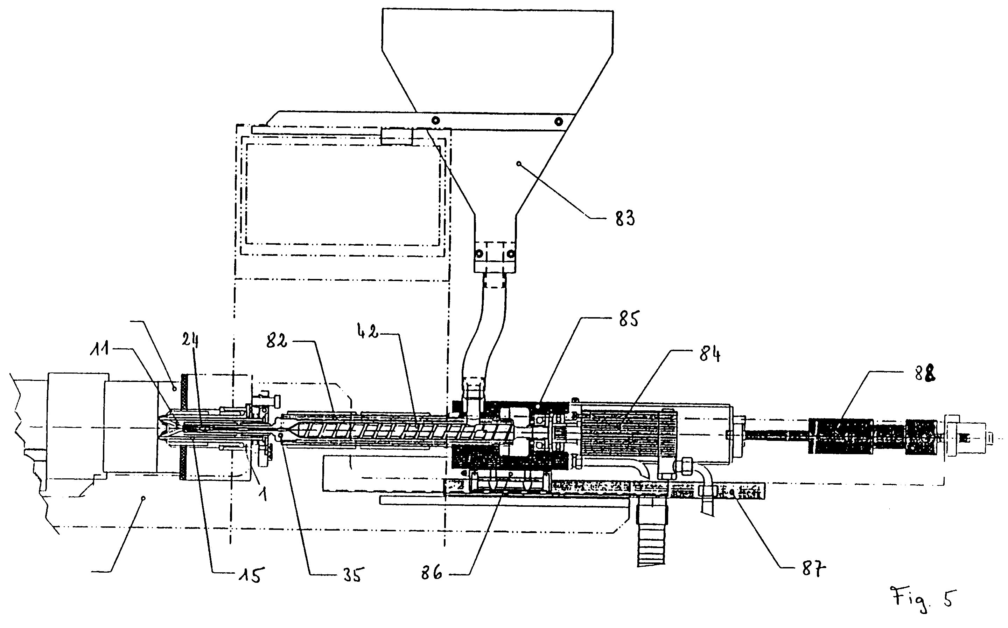

Bei der in Figur 5 gezeigten Ausführungsform liegen die Plastifizierschnecke 42 und die Heisskanaldüse 1 in axialer Richtung hintereinander. Dazu ist der Spritzkolben 35 mit einem Materialzufuhrkanal 24, insbesondere einer zentralen Bohrung versehen. Die Schnecke 42 wird in einem beheizbaren Zylinderrohr 82 geführt und aus einem Granulattrichter 83 mit dem nötigen Kunststoffmaterial versorgt. Diese Plastifizierschnecke 42 wird von einem Antriebsmotor 84 angetrieben und ist, zusammen mit dem Zylinderrohr 82 für die Plastifizierschnecke 42, an einem Lagergehäuse 85 befestigt. Dieses Lagergehäuse 85 weist einen Führungswagen 86 auf, welcher auf einer Führungsschiene 87 gleitend abgestützt ist. Mittels eines pneumatischen Antriebs 88 kann das Lagergehäuse 85 gemeinsam mit dem Antriebsmotor 84, dem Zylinderrohr 82 und dem Spritzkolben 35 auf dieser Führungsschiene 87 verschoben werden. Beim Füllen des Sammelraums 10 mit plastifiziertem Kunststoffmaterial wird das Lagergehäuse 85 gemeinsam mit der Plastifizierschnecke 42 und dem Antriebsmotor 84 auf der Führungsschiene 87 zurückgeschoben. Zum Ausstossen des gefüllten Sammelraums 10 werden Verschlussnadeln 15 zurückgezogen und wird der pneumatische Antrieb 88 aktiviert. Typischerweise weist der Sammelraum einen Durchmesser von 6 - 12 mm auf und hat eine Länge von 100 - 150 mm. Bei dieser Ausführungsform ist die Nadelverschlussplatte 89 für den Antrieb der Nadeln direkt hinter der Heisskanaldüse 1 angeordnet und können Nadeln 15 mit einer Länge von 100 - 120 mm verwendet werden.

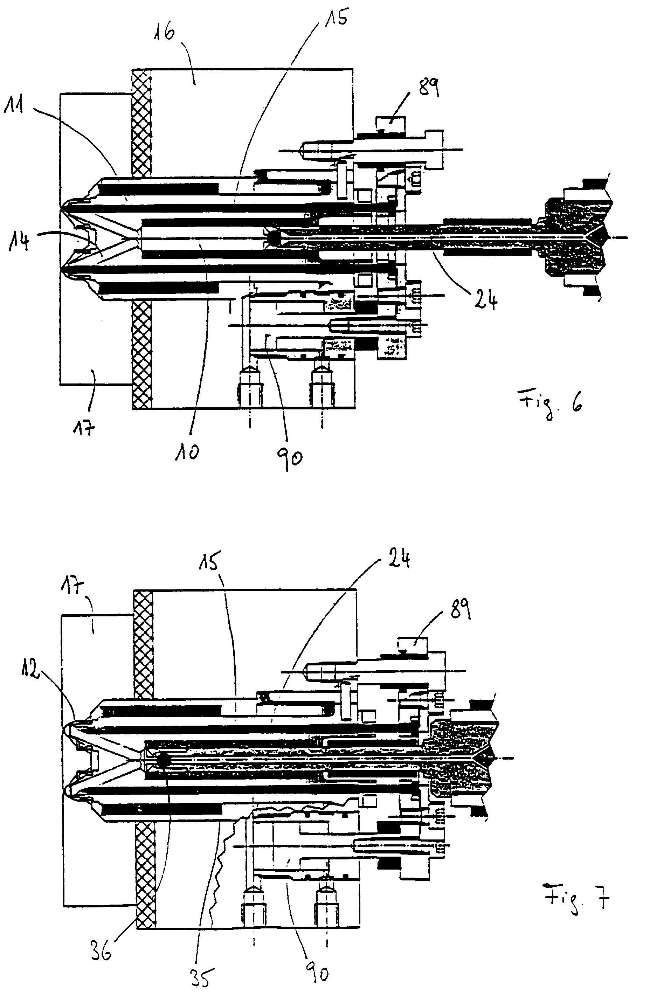

Figur 6 zeigt den Düsenkörper und die Führung der Verschlussnadeln im Detail. Dabei ist der Düsenkörper 11 in der festen Formplatte 16 fixiert und ragt angusseitig in den Formeinsatz 17. Dieser Düsenkörper 11 kann einen oder mehrere Einspritzkanäle 14 aufweisen, welche mit Verschlussnadeln 15 verschlossen werden können. Diese Verschlussnadeln 15 sind gemeinsam an einer Nadelverschlussplatte 89 befestigt, welche über ein Druckkolbensystem 90 bewegt werden kann. Beim Plastifizieren fliesst der Kunststoff in die Einspritzkanäle 14 und den Sammelraum 10. Dabei wird der Spritzkolben 35 gemeinsam mit dem Zylinderrohr 82 der Plastifizierschnecke 42 und dem Antriebsmotor 84 nach aussen gepresst.

Um die Formkavitäten zu füllen, wird, wie in Figur 7 dargestellt, die Nadelverschlussplatte 89 mit Hilfe des Druckkolbensystems 90 zurückgeschoben und werden damit die Verschlussnadeln 15 von den Öffnungen der Düsenspitze 12 zurückgezogen. Gleichzeitig wird der Spritzkolben 35 gemeinsam mit der im Lagergehäuse 85 befestigten Plastifizierschnecke 42 in den Sammelraum 10 geschoben. Ein Rückschlagventil 36, insbesondere ein Kugelventil schliesst dabei die zentrale Bohrung 24 des Spritzkolbens 35 und erlaubt damit eine genau dosierte Füllung der Formkavitäten.

Durch die vorliegende Erfindung können werkzeugseitige Heisskanalverteiler entfallen und kann die totale Verweilzeit der bis zu ca. 500°C heissen plastifizierten Kunststoffmasse in den Einspritzkanälen auf 2 Zyklen reduziert werden. Zusätzlich wird die Konstruktion der jeweiligen Werkzeuge stark vereinfacht, weil für diese beispielsweise keine Heisskanäle und Nadelverschlüsse mehr vorgesehen werden müssen.

Es versteht sich, dass die hier nur zur Erläuterung der Erfindung beschriebenen Ausführungsformen vom Fachmann ohne weiteres erfinderisches Tun anders ausgestaltet werden können. So kann anstelle des Kolbens eine Schnecke mit Spritzkopf oder anstelle des Rückschlagventils ein regelbares oder zwangsgesteuertes Druckventil eingesetzt werden. Ebenso lassen sich für den Verschluss der Düsenspitzenkanäle Schieber oder andere Ventile einsetzen. Das Einbringen von Entlüftungskanälen und besonderer Dichtungen sowie die Temperaturführung und Steuerung der einzelnen Maschinenteile liegen ebenfalls im Bereich des gewöhnlichen technischen Handelns des Fachmanns. Es versteht sich, dass die erfindungsgemässe Spritzgiessmaschine auch so dimensioniert werden kann, dass sich diese auch für die Fertigung von grösseren Teilen eignet.

## Patentansprüche

1. Spritzgiessmaschine zum Spritzgiessen von Kunststoff-Kleinteilen, mit einer Plastifiziervorrichtung (4) zur Plastifizierung von Kunststoffgranulat, mit einem Sammelraum (10) für das von der Plastifiziervorrichtung (4) plastifizierte Kunststoffmaterial, mit einem Materialzufuhrkanal (24) zwischen der Plastifiziervorrichtung (4) und dem Sammelraum (10) und mit einem Spritzkolben (35) zum Ausstossen des sich im Sammelraum (10) angesammelten Kunststoffmaterials in Kavitäten von Formplatten (17),
dadurch gekennzeichnet, dass die Spritzgiessmaschine eine Heisskanaldüse (1) mit mindestens einem Einspritzkanal (14) aufweist und der Sammelraum (10) in dieser Heisskanaldüse (1) liegt, welche Heisskanaldüse (1) durch die maschinenseitige Formplatte (17') ragt.

2. Spritzgiessmaschine nach Anspruch 1, dadurch gekennzeichnet, dass die Heisskanaldüse (1) einen Düsenkörper (11) und eine demontierbare Düsenspitze (12) umfasst.

3. Spritzgiessmaschine nach Anspruch 1 oder 2, dadurch gekennzeichnet, dass der Spritzkolben (35) eine Bohrung aufweist, deren antriebsseitiges Ende mit mindestens einer seitlichen Einlassöffnung und deren werkzeugsseitiges Ende mit einem Rückschlagventl versehen ist.

4. Spritzgiessmaschine nach Anspruch 3, dadurch gekennzeichnet, dass das Rückschlagventil ein Kugelventil ist.

5. Spritzgiessmaschine nach Anspruch 3, dadurch gekennzeichnet, dass der Spritzkolben (35) in einer Führungs- und und Verschleisshülse (19) geführt ist.

6. Spritzgiessmaschine nach Anspruch 1, dadurch gekennzeichnet, dass für das Verschliessen des mindestens einen Einspritzkanals (14) eine Nadelverschlussvorrichtung vorgesehen ist.

7. Spritzgiessmaschine nach Anspruch 1, dadurch gekennzeichnet, dass der Materialzufuhrkanal (24) in den einspritzkanalseitigen Bereich des Sammelraums (10) mündet.

8. Spritzgiessmaschine nach Anspruch 1, dadurch gekennzeichnet, dass am sammelraumseitigen Ende des Materialzufuhrkanals (24) ein zwangsgesteuerter Verschluss vorgesehen ist.

9. Spritzgiessmaschine nach Anspruch 6, dadurch gekennzeichnet, dass die Nadelverschlussvorrichtung eine Druckkolbenanordnung aufweist.

10. Spritzgiessmaschine nach Anspruch 9, dadurch gekennzeichnet, dass die Nadelverschlussvorrichtung zwischen der Heisskanaldüse (1) und der Plastifiziervorrichtung (4) angeordnet ist.

## Claims

1. Injection moulding machine for injection moulding of miniature plastic parts, with a plasticizing device (4) for plasticizing plastic granules, having a collection chamber (10) for the plastic material plasticized in the plasticizing device (4), having a material infeed channel (24) between the plasticizing device (4) and the collection chamber (10), and having an injection ram (35) for ejecting the plastic material collected in the collection chamber (10) into cavities of moulding dies (17),
characterized in that the injection moulding machine comprises a hot channel nozzle (1) having at least one injection channel (14) and that the collection chamber (10) lies within this hot channel nozzle (1), said hot channel nozzle (1) protruding through the die plate on the machine side (17').

2. Injection moulding machine according to claim 1, characterized in that the hot channel nozzle (1) comprises a nozzle body (11) and a removable nozzle tip (12).

3. Injection moulding machine according to claims 1 or 2, characterized in that the injection ram (35) comprises a bore, whose drive oriented end has at least one lateral inlet opening and the machine oriented end has a back-pressure valve.

4. Injection moulding machine according to claim 3, characterized in that the back-pressure valve is a ball valve.

5. Injection moulding machine according to claim 3, characterized in that the injection ram (35) is guided in a guiding and wear sleeve (19).

6. Injection moulding machine according to claim 1, characterized in that for closure of the at least one injection channel (14) a needle closure device is provided.

7. Injection moulding machine according to claim 1, characterized in that the material feed channel (24) opens into the region of the collection chamber (10), being on the side of the infeed channel.

8. Injection moulding machine according to claim 1, characterized in that the end of the material infeed channel being at the side of the collection chamber is provided with a controlled closure device.

9. Injection moulding machine according to claim 6, characterized in that the needle closure device is provided with a pressure piston device.

10. Injection moulding machine according to claim 9, characterized in that the needle closure device is arranged between the hot channel nozzle (1) and the plasticizing device (4).

## Revendications

1. Machine de moulage par injection pour l'injection pour la fabrication par injection de petites pièces en matière plastique, avec un dispositif de plastification (4) pour la mise à l'état plastique de granulat de matière plastique, une chambre de récupération (10) pour la matière plastique mise à l'état plastique par le dispositif de plastification (4), un canal d'alimentation (24) disposé entre le dispositif de plastification (4) et la chambre de récupération, et un piston d'injection (35) pour l'injection de la matière plastique qui s'est amassée dans la chambre de récupération (10) dans les empreintes de plaques de moulage (17),
caractérisée en ce que la machine d'injection possède une filère d'injection (1) à canaux chauffants avec au moins un canal d'injection (14) et que la chambre de récupération (10) se situe dans cette fière d'injection (1), ladite fière d'injection (1) passant au travers de la plaque du moule située du côté de la machine.

2. Machine d'injection selon la revendication 1, caractérisée en ce que la filière à canaux chauffants (1) comprend un corps de fière (11) et une extrémité de buse (12) démontable.

3. Machine d'injection selon la revendication 1 ou 2, caractérisée en ce que le piston d'injection (35) comprend un perçage dont l'extrémité se situant du côté de la machine est munie d'au moins un orifice d'alimentation latéral, et dont l'extrémité se situant du côté du moule est munie d'au moins un clapet anti-retour.

4. Machine d'injection selon la revendication 3, caractérisée en ce que le clapet anti-retour est une soupape à bille.

5. Machine d'injection selon la revendication 3, caractérisée en ce que le piston d'injection (35) est guidé dans une bague (19) de guidage et d'usure.

6. Machine d'injection selon la revendication 1, caractérisée en ce qu'un dispositif d'obturation à pointeaux est prévu pour l'obturation du - au minimum un- canal d'injection (14).

7. Machine d'injection selon la revendication 1, caractérisée en ce que le canal d'alimentation (24) débouche dans la zone située du côté du canal d'injection de la chambre de récupération (10).

8. Machine d'injection selon la revendication 1, caractérisée en ce qu'un dispositif de fermeture commandée est prévu du à l'extrémité du canal d'alimentation (24) située du côté de la chambre de récupération.

9. Machine d'injection selon la revendication 6, caractérisée en ce que le dispositif de fermeture à pointeaux présente un vérin.

10. Machine d'injection selon la revendication 9, caractérisée en ce que le dispositif de fermeture à pointeaux est disposé entre la filière à canaux chauffants (1) et le dispositif de plastification (4).
